# EUROPEAN PATENT SPECIFICATION

(11) **EP 2 047 210 B1**
(45) Date of publication and mention of the grant of the patent: **23.12.2009**
(21) Application number: 07789357.6
(22) Date of filing: 26.07.2007
(51) Int. Cl.: G01B 11/25, B61K 9/08, E01B 35/06

(54) **OPTICAL PROFILE SCANNING**
OPTISCHE PROFILABTASTUNG
BALAYAGE DE PROFIL OPTIQUE

(30) Priority: 28.07.2006 GB 0615032
(43) Date of publication of application: 15.04.2009
(73) Proprietor: DeltaRail Group Limited, Pride Park Derby Derbyshire DE24 8HS (GB)
(72) Inventor: PATKO, Sandor, Matyas, Derbyshire DE22 3EY (GB); ASPREY, Peter Daniel, Derbyshire DE23 6HH (GB)
(74) Representative: Mansfield, Peter Turquand
(86) International application number: PCT/GB2007/050448
(87) International publication number: WO 2008/012582

(56) References cited:
- DE-U1- 29 921 143
- US-A- 4 325 639
- US-A1- 2006 144 129

## Description

This invention relates to an optical method for determining a profile of a surface, and to a profile scanner operating in accordance with this method.

Optical profile scanners such as laser profile scanners are known instruments. They comprise a light source such as a laser that is arranged to scan through an angle to define a plane of illumination, and a camera arranged to view the shape of the line of illumination on an object, such as a wheel of a railway train. From the shape of the line seen by the camera, the shape of the object can be determined. Hitherto the calibration of such devices has required information about the locations of the light source and the camera. The standard known method of operation is to arrange the light source such that the incident plane is perpendicular to a longitudinal axis of the object; the camera is arranged with its viewing axis at a large angle (say in the range 45° to 70°) to the incident plane. Such instruments can provide accurate measurements of the cross-sectional shape of objects such as rails and steel bars, but where this technique is used to monitor the shape of metallic objects which are shiny there are two potential problems: firstly there is a risk of sunlight being reflected towards the camera; secondly the amount of light scattered towards the camera by a shiny surface is a small proportion of the incident light, and consequently the technique requires a high power light source and a sensitive camera, and needs good shielding for safety of any people in the vicinity.

US 2006/0144129A describes a system for measuring the relative displacement of a railroad track, the system comprising:
a rail vehicle having a body and a set of wheels, at least one of the wheels of the set of wheels engaging the rail at a wheel and rail contact point;
at least one optical emitter mounted to the vehicle, the optical emitter being configured to emit a beam detectable on the underlying rail surface at a distance along the rail spaced from at least one of the wheel and rail contact points; and
a camera mounted to the vehicle for recording the beam on the underlying rail surface as the vehicle travels along the rail for determining the relative vertical displacement of the rail.

DE 29921143 claims and describes a longitudinal measuring apparatus comprising a measuring ray generator and means for determining the distance of an object from the reflectance of light from the object, wherein two parallel light beams are projected at the object and a camera records images of reflected light from the object, the distance between the images of the two light beams being used to determine the distance between the apparatus and the object. The light beams may be in the form of rays or planar beams.

US 4325639A claims and describes a method for measuring distances and for determining the three-dimensional contour of a workpiece comprising directing two light beams of different wavelengths onto the workpiece, pivoting the beams in their common plane, pivoting the common plane around an axis which is common to said plane, measuring the angles of inclination of the lightpoints produced by the beams on the workpiece surface in the different wavelengths, determining the position of the image of each light point ant calculating the distances and the contour using the angles of inclination and the positions of the images.

According to the present invention there is provided a method of determining a profile of a surface of an object, the object, having a longitudinal axis and the profile being perpendicular to the longitudinal axis, the method comprising the steps of arranging a camera to view a portion of the surface with its viewing axis substantially perpendicular to the longitudinal axis of the object, and arranging two light beam sources to define planes of illumination, the planes of illumination intersecting the said portion of the surface to define two lines on the surface, operating the camera to produce an image of the portion of the surface including images of the two lines, characterised by determining the longitudinal separation of the two lines in the image at a multiplicity of positions along the lines across the object, and determining therefrom the surface profile of the object.

Preferably the light beam sources are arranged close to the camera, most preferably with the camera between them. Preferably the light beam sources and the camera are sufficiently close together that the angles between straight lines from a position on the surface to the light beam sources and to the camera are less than 40° and more preferably less than 30°. This has the benefit that the light beam sources and camera can be fixed together and treated as a single unit. A further benefit is that the camera is viewing light scattered in a direction close to that of reflected light, which is somewhat more intense than light scattered at large angles, so this arrangement enhances the intensity of the image.

In one mode of operation the planes of illumination are each parallel to the viewing axis of the camera. In this case the two lines on the surface are parallel, but their separation in the image at different positions along them varies because of any variation in distance from the camera (due to the surface profile), and so the separation of points along the lines in the image may be related to the surface profile. However this does not provide a sensitive measurement method.

In a preferred mode of operation the planes of illumination are inclined to one another. This enables considerably greater sensitivity to be obtained, the separation of the lines in the image varying much more significantly with distance from the camera and so with the profile. The planes of illumination may be arranged to intersect between the camera and the surface, or beyond the surface.

The present invention also provides a profile scanner for determining a profile of a surface of an object, the object having a longitudinal axis, and the profile scanner comprising a camera which is arranged in operation to view a portion of the surface with its viewing axis substantially perpendicular to the longitudinal axis of the object , and two light beam sources which are arranged to define planes of illumination, the planes of illumination intersecting the said portion of the surface to define two lines on the surface, so that in operation the camera produces an image of the portion of the surface including images of the two lines, and further comprising means adapted to determine the surface profile of the object from the separation of the two lines in the image at a multiplicity of positions along the two lines.

Preferably the light beam sources are arranged close to the camera, most preferably being mounted together as a unit. They may be enclosed within a common housing provided with an aperture or window.

In this specification the term "longitudinal axis" should not be taken as implying that the object is of exactly uniform cross-section: if it were, then one measurement of its profile would be sufficient. The longitudinal axis is rather an axis that extends in the length direction of the object. The method of the present invention is particularly suited to measurements on objects which do not vary rapidly in their cross-sectional profile, as it will be appreciated that the profile that is deduced is averaged over the distance between the lines on the surface. It is for example suitable for measurements on yacht masts; or on rails on a railway for determining the shape of the railhead, and in this context both the camera and light sources would be arranged so that the viewing axis intersects the railhead from above. Problems from reflected sunlight can easily be avoided, as reflected sunlight would only go vertically upwards from the railhead if the sun were substantially overhead, and in that case the viewed portion of the surface would typically be in the shadow of the camera or of adjacent items. Hence a less intense light source can be used than is required with the conventional laser profile scanner.

It will also be appreciated that calibration of the profile scanner of the invention is straightforward: for example it may be achieved by holding a flat piece of card at different known distances from the camera, and at each distance observing the separation of the two lines in the image. The results from these measurements can be incorporated into a lookup table or used in equations.

The invention will now be further and more particularly described, by way of example only, and with reference to the accompanying drawings in which:
Figure 1 shows a side view of a laser profile scanner of the invention; and
Figure 2 shows a view of a modification to the scanner of figure 1, in a direction equivalent to that of arrow 2 in figure 1.

An optical profile scanner 10 is shown for determining variations in the profile of a railhead 11 of a rail 12. The scanner 10 includes a video camera 14 arranged above the railhead 11 to view the railhead 11 so that its viewing axis 15 (shown as a chain dotted line) is substantially perpendicular to the longitudinal axis of the rail 12. The scanner 10 also includes two scanning light sources 16 and 18 (which would typically be scanning lasers) supported on opposite sides of the camera 14, defining respective planes of illumination 16a and 18a. The light sources 16 and 18 are spaced apart in a direction parallel to the longitudinal axis of the rail 12, and the scanning planes 16a and 18a are tilted respectively forwards and backwards by about 15° relative to a plane perpendicular to the longitudinal axis. The planes of illumination 16a and 18a intersect about halfway between the objective lens of the camera 14 and the railhead 11, so that they diverge in the vicinity of the railhead 11. The laser scans to and fro so as to define the plane, which would give a straight line if it were incident on a flat surface. The image from the camera 14 is supplied to an image-processing computer 20. For several different positions across the width of the rail 12 the computer 20 determines the longitudinal separation of the corresponding lines in the image. That longitudinal separation depends only on the distance of that part of the railhead 11 from the camera 14, so that the computer 20 can hence determine the variation in height of the railhead 11 across the width of the rail 12, that is to say its profile.

Each point in the reconstructed profile is given by two coordinates, Z and Y. The distance from the camera, Z, is the first coordinate, and this is the distance measured parallel to.the optical axis of the camera (not radially from the camera). The calibration process (described below) enables this distance to be determined for all positions in the image. The value of Z is obtained from a measurement of the distance apart of the lines, in a direction parallel to the longitudinal axis X, at a particular position in the image. The other coordinate, Y, represents the distance laterally away from the longitudinal axis X. Once the value of Z has been ascertained for a particular position in the image, the corresponding value of Y can be deduced by mathematically reversing the imaging process from the position on the image (at which the separation was measured), to deduce the corresponding distance Y from the axis at the distance Z. Hence the profile can be deduced across the width of the railhead 11.

In a modification, the scanning light sources 16 and 18 are replaced by means to generate and project a plane of light, for example using line-generating optics.

The scanner 10 may be calibrated by holding a flat surface such as a white card at various different distances away from the camera 14 (that is to say at various different heights), so that the planes of illumination 16a and 18a form straight lines on the card, and for each position of the card determining the separation of the corresponding lines in the image. The relationship between line separation and distance is geometrically defined. If, due to optical distortions, the images of the straight lines are not themselves straight, then the calibration relationship will be slightly different at different positions across the width of the object. In any event, the calibration process can be used to generate a look-up table to establish the actual relationship, for example, or to represent the relationship graphically, or by means of an equation (such as a polynomial).

It will be appreciated that the scanner 10 may be modified in several different ways while remaining within the scope of the present invention. It will be appreciated that instead of a video camera the scanner might incorporate a film camera, the subsequent image analysis being carried out after the film has been developed. Because the light sources 16 and 18 are mounted close to the camera 14 the scanner is a comparatively compact instrument, and indeed the light sources 16 and 18 and the camera 14 might be enclosed within a common housing 22 (shown in broken lines) provided with apertures or windows for the camera 14 and light sources 16 and 18.

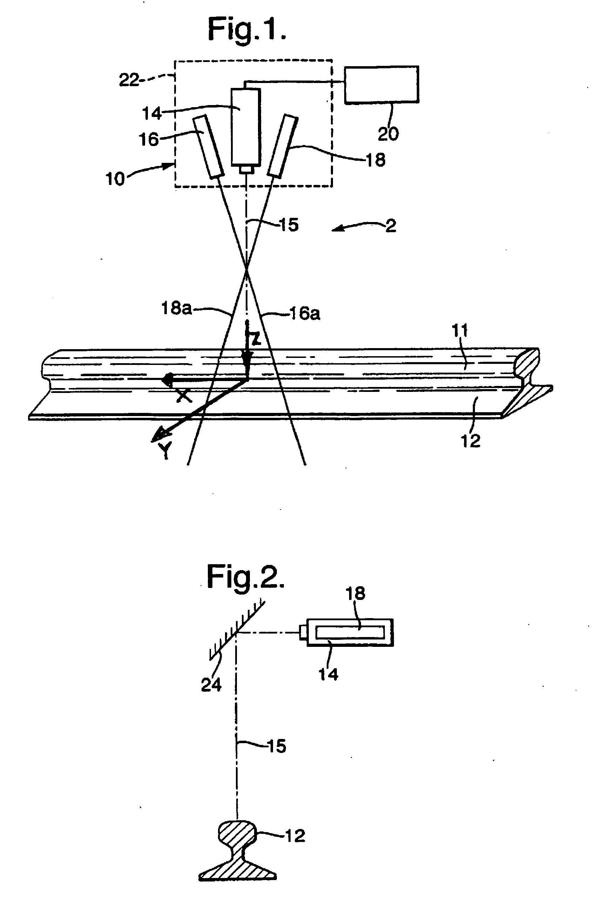

The scanner 10 may be installed underneath a railway vehicle (not shown) so that it can readily be scanned along the length of the rail 10 to monitor any variations in its profile. In a modification, as shown in figure 2 to which reference is now made, the camera 14 is set up in a generally horizontal plane with the light sources 16 and 18 (only the latter is shown in figure 2) scanning above and below that horizontal plane, and a mirror 24 is arranged to ensure that the camera 14 views the railhead 11 from above. This arrangement may enable the total height of the scanner 10 to be reduced, and may enable the scanner 10 to be mounted into a restricted space.

## Claims

1. A method of determining a profile of a surface (11) of an object (12), the object having a longitudinal axis and the profile being perpendicular to the longitudinal axis, the method comprising the steps of arranging a camera (14) to view a portion of the surface (11) with its viewing axis (15) substantially perpendicular to the longitudinal axis (X) of the object (12), and arranging two light beam sources (16, 18) to define planes of illumination (16a, 18a), the planes of illumination (16a, 18a) intersecting the said portion of the surface to define two lines on the surface, operating the camera (14) to produce an image of the portion of the surface including images of the two lines, **characterized by** determining the longitudinal separation of the two lines in the image at a multiplicity of positions along the lines across the object (12), and determining (20) therefrom the surface profile of the object (12).

2. A method as claimed in claim 1 wherein the light beam sources (16, 18) are arranged close to the camera (14), with the camera between them;

3. A method as claimed in claim 1 or claim 2 wherein the light beam sources (16, 18) and the camera (14) are sufficiently close together that the angles between straight lines from a position on the surface to the light beam sources and to the camera are less than 40° and more preferably less than 30°.

4. A method as claimed in any one of the preceding claims wherein the planes (16a, 18a) of illumination are each parallel to the viewing axis (15) of the camera (14).

5. A method as claimed in any one of claims 1 to 3 wherein the planes of illumination (16a, 18a) are inclined to.one another.

6. A method as claimed in claim 5 wherein the planes of illumination (16a, 18a) are arranged to intersect between the camera (14) and the surface (11).

7. A profile scanner (10) for determining a profile of a surface of an object (12), the object having a longitudinal axis (X), and the profile scanner comprising a camera (14) which is arranged in operation to view a portion of the surface (11) with its viewing axis (15) substantially perpendicular to the longitudinal axis (X) of the object (12), and two light beam sources (16, 18) which are arranged.to define planes of illumination (16a, 18a), the planes of illumination intersecting the said portion of the surface (11) to define two lines on the surface, so that in operation the camera produces an image of the portion of the surface including images of the two lines, **characterized by** means (20) adapted to determine the surface profile of the object (12) from the separation of the two lines in the image at a multiplicity of positions along the two lines.

8. A profile scanner as claimed in claim 7 wherein the light beam sources (16, 18) are arranged close to the camera (14), and are mounted together as a unit (10).

9. A profile scanner as claimed in claim 8 wherein the light beam sources (16, 18) and the camera (14) are enclosed within a common housing (22).

10. A profile scanner as claimed in any one of claims 7 to 9 incorporating a reflection means (24) to ensure that the camera views the object along a desired viewing axis.

## Patentansprüche

1. Verfahren zur Ermittlung eines Profils einer Oberfläche (11) eines Objekts (12), wobei das Objekt eine Längsachse aufweist und das Profil rechtwinklig zur Längsachse verläuft, wobei das Verfahren folgende Schritte umfasst: Anordnen einer Kamera (14), die eine im Wesentlichen senkrecht zur Längsachse (X) des Objekts (12) ausgerichtete Blickachse (15) zur Erfassung eines bestimmten Abschnitts der Oberfläche (11) aufweist; Anordnen von zwei Lichtquellen (16, 18) zur Festlegung von Belichtungsebenen (16a, 18a),
wobei die Belichtungsebenen (16a, 18a) den bestimmten Oberflächenabschnitt so schneiden, dass auf der Oberfläche zwei Linien definiert werden; und Inbetriebnahme der Kamera (14), um ein Bild von dem bestimmten Oberflächenabschnitt sowie Bilder der beiden Linien zu erzeugen,
**gekennzeichnet durch**
Ermittlung des in Längsrichtung ausgebildeten Abstandes zwischen den beiden Linien im Bild an mehreren Positionen entlang der das Objekt (12) schneidenden Linien, und darauf basierende Ermittlung (20) des Oberflächenprofils des Objekts (12).

2. Verfahren nach Anspruch 1,
wobei die Lichtquellen (16, 18) nahe an der Kamera (14) angeordnet sind, wobei die Kamera (14) dazwischenliegend angeordnet ist.

3. Verfahren nach Anspruch 1 oder 2,
wobei die Lichtquellen (16, 18) und die Kamera (14) hinreichend nahe zueinander angeordnet sind, so dass die Winkel zwischen geraden Linien ausgehend von einer beliebigen Position auf der Oberfläche zu den Lichtquellen und zur Kamera weniger als 40° und besonders bevorzugt weniger als 30° betragen.

4. Verfahren nach einem der vorangehenden Ansprüche,
wobei die Belichtungsebenen (16a, 18a) jeweils parallel zur Blickachse (15) der Kamera (14) verlaufen.

5. Verfahren nach einem der vorangehenden Ansprüche 1 bis 3,
wobei die Belichtungsebenen (16a, 18a) zueinander geneigt sind.

6. Verfahren nach Anspruch 5,
wobei die Belichtungsebenen (16a, 18a) so angeordnet sind, dass sie zwischen der Kamera (14) und der Oberfläche (11) hindurch verlaufen.

7. Profilscanner (10) zur Bestimmung eines Profils einer Oberfläche eines Objekts (12), wobei das Objekt eine Längsachse (X) aufweist, und
wobei der Profilscanner Folgendes umfasst: eine Kamera (14), die so angeordnet ist, dass sie bei Inbetriebnahme einen bestimmten Abschnitt der Oberfläche (11) bildlich erfassen kann, wobei ihre Blickachse (15) im Wesentlichen senkrecht zur Längsachse (X) des Objekts (12) ausgerichtet ist, und zwei Lichtquellen (16, 18), die zur Festlegung der Belichtungsebenen (16a, 18a) angeordnet sind, wobei die Belichtungsebenen den bestimmten Abschnitt der Oberfläche (11) zur Definition von zwei Linien auf der Oberfläche schneiden, so dass die in Betrieb genommene Kamera ein Bild des bestimmten Oberflächenabschnittes sowie Bilder der beiden Linien erzeugen kann,
**gekennzeichnet durch**
Mittel (20), die zur Bestimmung des Oberflächenprofils des Objekts (12) basierend auf dem Abstand zwischen den beiden Linien im Bild an mehreren Positionen entlang der beiden Linien ausgelegt sind.

8. Profilscanner nach Anspruch 7,
wobei die Lichtquellen (16, 18) nahe bei der Kamera (14) angeordnet sind und eine Einheit (10) bilden.

9. Profilscanner nach Anspruch 8,
wobei die Lichtquellen (16, 18) und die Kamera (14) in ein einziges Gehäuse (22) eingefasst sind.

10. Profilscanner nach einem der vorangehenden Ansprüche 7 bis 9, umfassend ein Reflexionsmittel (24), um sicherzustellen, dass die Kamera das Objekt entlang einer gewünschten Blickachse erfassen kann.

## Revendications

1. Procédé de détermination d'un profil d'une surface (11) d'un objet (12), l'objet ayant un axe longitudinal et le profil étant perpendiculaire à l'axe longitudinal, le procédé comprenant les étapes d'agencement d'une caméra (14) pour voir une partie de la surface (11) avec son axe de visée (15) substantiellement perpendiculaire à l'axe longitudinal (X) de l'objet (12), et d'agencement de deux sources de faisceaux lumineux (16, 18) pour définir des plans d'éclairage (16a, 18a), les plans d'éclairage (16a, 18a) coupant ladite partie de la surface pour définir deux lignes sur la surface, d'utilisation de la caméra (14) pour produire une image de la partie de la surface incluant des images des deux lignes, **caractérisé par** la détermination de la séparation longitudinale des deux lignes dans l'image en une multiplicité de positions le long des lignes au travers de l'objet (12), et la détermination (20) à partir de celles-ci du profil de surface de l'objet (12).

2. Procédé selon la revendication 1 dans lequel les sources de faisceaux lumineux (16, 18) sont agencées à proximité de la caméra (14), avec la caméra entre elles.

3. Procédé selon la revendication 1 ou la revendication 2 dans lequel les sources de faisceaux lumineux (16, 18) et la caméra (14) sont suffisamment proches les unes des autres pour que les angles entre des lignes droites d'une position sur la surface jusqu'aux sources de faisceaux lumineux et à la caméra soient inférieurs à 40° et plus préférablement inférieurs à 30°.

4. Procédé selon l'une quelconque des revendications précédentes dans lequel les plans (16a, 18a) d'éclairage sont chacun parallèles à l'axe de visée (15) de la caméra (14).

5. Procédé selon l'une quelconque des revendications 1 à 3 dans lequel les plans d'éclairage (16a, 18a) sont inclinés l'un vers l'autre.

6. Procédé selon la revendication 5 dans lequel les plans d'éclairage (16a, 18a) sont agencés de façon à se couper entre la caméra (14) et la surface (11).

7. Numériseur à balayage de profil (10) pour déterminer un profil d'une surface d'un objet (12), l'objet ayant un axe longitudinal (X), et le numériseur à balayage de profil comprenant une caméra (14) qui est agencée en service pour voir une partie de la surface (11) avec son axe de visée (15) substantiellement perpendiculaire à l'axe longitudinal (X) de l'objet (12), et deux sources de faisceaux lumineux (16, 18) qui sont agencées pour définir des plans d'éclairage (16a, 18a), les plans d'éclairage coupant ladite partie de la surface (11) pour définir deux lignes sur la surface, de sorte qu'en service, la caméra produit une image de la partie de la surface incluant des images des deux lignes, **caractérisé par** un moyen (20) adapté pour déterminer le profil de surface de l'objet (12) à partir de la séparation des deux lignes dans l'image en une multiplicité de positions le long des deux lignes.

8. Numériseur à balayage de profil selon la revendication 7 dans lequel les sources de faisceaux lumineux (16, 18) sont agencées à proximité de la caméra (14), et sont montées ensemble comme une unité (10).

9. Numériseur à balayage de profil selon la revendication 8 dans lequel les sources de faisceaux lumineux (16, 18) et la caméra (14) sont reçues dans un logement commun (22).

10. Numériseur à balayage de profil selon l'une quelconque des revendications 7 à 9 incorporant un moyen de réflexion (24) pour assurer que la caméra voit l'objet le long d'un axe de visée désiré.
